(19) Europäisches Patentamt
European Patent Office
Office européen des brevets

(11) **EP 4 651 447 A1**

(12) **EUROPEAN PATENT APPLICATION**

(43) Date of publication:
**19.11.2025 Bulletin 2025/47**

(21) Application number: **24221009.4**

(22) Date of filing: **18.12.2024**

(51) International Patent Classification (IPC):
**H04L 12/40** (2006.01)

(52) Cooperative Patent Classification (CPC):
**H04L 12/40169**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.05.2024 CN 202421080483 U**

(71) Applicant: **Eve Energy Co. Ltd.**
**Huizhou, Guangdong 516000 (CN)**

(72) Inventors:
• **PENG, Hongwei**
**Huizhou, Guangdong 516006 (CN)**
• **TIAN, Minyuan**
**Huizhou, Guangdong 516006 (CN)**
• **PENG, Geng**
**Huizhou, Guangdong 516006 (CN)**

(74) Representative: **Herrero & Asociados, S.L.**
**Edificio Aqua - Calle Agustín de Foxá, 4-10, 2oA**
**28036 Madrid (ES)**

(54) **BATTERY MANAGEMENT SYSTEM AND ELECTRONIC DEVICE**

(57)    A battery management system (100) and an electronic device (700) are provided. The battery management system (100) includes a master control module (10), a plurality of selection modules (30), and N slave control modules (20). The N slave control modules (20) are coupled in sequence. The slave control module (20) includes an input unit (21), an output unit (22) and a communication unit (23). The input unit (21) of the first slave control module (20) is coupled to the master control module (10), the input unit (21) of the mth slave control module (20) is coupled to the output unit (22) of the (m-1) th slave control module (20) and the master control module (10) through one of the selection modules (30). The communication units (23) of the N slave control modules (20) are respectively coupled to the master control module (10).

FIG. 1

**Description**

## TECHNICAL FIELD

The present disclosure relates to the technology field of energy storage, and in particular to a battery management system and an electronic device.

## BACKGROUND

A battery management system (BMS) is mainly used to monitor parameter information (temperature, voltage, current, charge state, etc.) of energy storage devices, and manage and control status of the energy storage devices.

Since the energy storage device generally includes a plurality of battery clusters, and each battery cluster includes a plurality of cells. A plurality of slave controllers are generally used to respectively monitor the plurality of battery clusters, so as to realize voltage and temperature acquisition function and equalization control function for individual battery clusters. Then, a master controller is used to perform an overall control, which is responsible for collecting and processing the signals collected by each slave controller, and estimating battery statuses according to the collected signals, so as to implement charging and discharging control and logic operations for each battery cluster.

When there are many slave controllers, in order to facilitate the management of the slave controllers, the master controller needs to address the slave controllers. Thus, how to efficiently address the slave controllers has becomes an urgent problem to be solved.

## SUMMARY

In one aspect, the present disclosure provides a battery management system. The battery management system includes a master control module, a plurality of selection modules, and N slave control modules. The slave control module includes an input unit, an output unit and a communication unit. The input unit of the first slave control module of the N slave control modules is coupled to the master control module, so as to receive the addressing enable signal from the master control module. The input unit of the mth slave control module is coupled to the output unit of the (m-1)th slave control module and the master control module through one of the selection modules, so as to receive, through the selection module, the addressing enable signal from the (m-1)th slave control module or the master control module. The communication units of the N slave control modules are respectively coupled to the master control module. Where N and m are integers, $N \geq 2$, $2 \leq m \leq N$.

In another aspect, the present disclosure provides an electronic device, where the electronic device includes the battery management system described above. The battery management system provided in the present disclosure includes: a master control module, a plurality of selection modules, and N slave control modules. The slave control module includes an input unit, an output unit and a communication unit. The input unit of the first slave control module of the N slave control modules is coupled to the master control module, so as to receive the addressing enable signal from the master control module. The input unit of the mth slave control module is coupled to the output unit of the (m-1)th slave control module and the master control module through one of the selection modules, so as to receive, through the selection module, the addressing enable signal from the (m-1)th slave control module or the master control module. The communication units of the N slave control modules are respectively coupled to the master control module. Where N and m are integers, $N \geq 2$, $2 \leq m \leq N$.

The beneficial effects of the battery management system and the electronic device provided in the present disclosure are: by providing selection modules among the plurality of slave control modules, different addressing modes can be freely switched, that is, automatic addressing or manual addressing can be implemented. On the one hand, the diversified addressing modes provided are beneficial to the operability of the battery management system, and on the other hand, the selection may be performed according to different application scenarios, for example, when one of the slave control modules fails, the slave control module can be independently addressed without sequentially addressing all the slave control modules, which improves the addressing efficiency of the slave control modules.

## BRIEF DESCRIPTION OF THE DRAWINGS

FIG. 1 is a schematic structural diagram of a battery management system according to some embodiments.
FIG. 2 is a schematic structural diagram of a slave control module according to some embodiments.
FIG. 3 is a schematic structural diagram of a selection module according to some embodiments.
FIG. 4 is a flowchart of an addressing method for the battery management system according to some embodiments.

FIG. 5 is a schematic structural diagram of an output unit according to some embodiments.
FIG. 6 is a schematic structural diagram of an input unit according to some embodiments.
FIG. 7 is a schematic structural diagram of an electronic device according to some embodiments.

## DETAILED DESCRIPTION

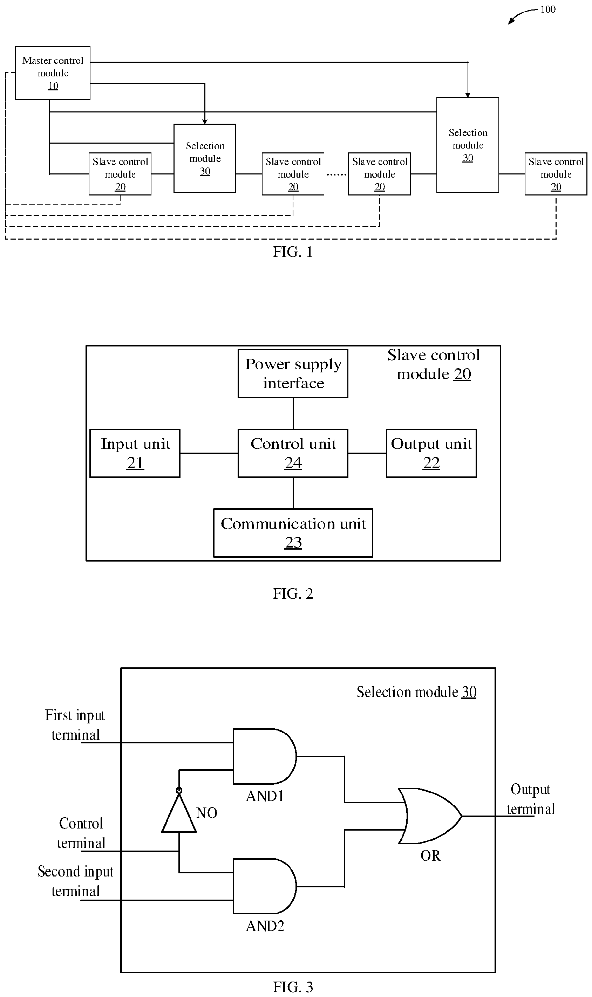

Referring to FIG. 1 and FIG. 2, FIG. 1 is a schematic structural diagram of a battery management system provided in an embodiment of the present disclosure. The battery management system 100 includes a master control module 10, a plurality of slave control modules 20 and a plurality of selection modules 30. FIG. 2 is a schematic structural diagram of a slave control module 20 in an embodiment.

The master control module 10 may be a second battery management unit (SBMU), and the slave control module 20 may be a voltage control management unit (VCMU).

The slave control module 20 includes an input unit 21, an output unit 22 and a communication unit 23. In the embodiment, the amount of the slave control modules 20 is N, where N is an integer, and the N slave control modules 20 are coupled in sequence. The input unit 21 of the first slave control module 20 of the N slave control modules 20 is coupled to the master control module 10, the input unit 21 of the mth slave control module 20 is coupled to the output unit 22 of the (m-1)th slave control module 20 and the master control module 10 through one of the selection modules 30, and the communication units 23 of the N slave control modules 20 are respectively coupled to the master control module 10. It can be understood that, the first slave control module 20 is the first one in the order of connection among the N slave control modules 20. Where m is an integer, $N \geq 2$, $2 \leq m \leq N$.

The input unit 21 of the first slave control module 20 is configured to receive an addressing enable signal sent by the master control module 10. The input unit of the mth slave module 20 is configured to receive an addressing enable signal sent by the output unit 22 of the (m-1)th slave control module 20 through a corresponding selection module 30, or to receive an addressing enable signal sent by the master control module 10 through the corresponding selection module 30. The selection module 30 coupled between the mth slave module 20 and the (m-1)th slave control module 20 is configured to enable a connection between the mth slave module 20 and the (m-1)th slave module 20, or to enable a connection between the mth slave module 20 and the master control module 10.

In the embodiment of the present disclosure, there are two types of addressing modes, i.e., automatic addressing mode and manual addressing mode. The selection of the automatic addressing mode and the manual addressing mode is determined by the master control module 10 controlling the selection module 30 to enable different paths. Specifically, when the master control module 10 controls the selection module 30 to enable the connection between the (m-1)th slave control module 20 and the mth slave control module 20, the N slave control modules 20 are sequentially coupled, thereby achieving automatic addressing of the N slave control modules 20 in sequence. When the master control module 10 controls the selection module 30 to enable the connection between the master control module 10 and the slave control module 20, manual addressing of the slave control module 20 is achieved.

In the automatic addressing mode, the master control module 10 sends the addressing enable signal to the first slave control module 20, and the first slave control module 20 enters an addressing status after receiving the addressing enable signal through the input unit 21. In the addressing status, the first slave control module 20 receives, through the communication unit 23, addressing data (such as an addressing message) sent by the master control module. After finishing addressing based on the addressing data, the first slave control module 20 sends an addressing enable signal to the input unit 21 of the second slave control module 20 through the output unit 22. The addressing method of each subsequent slave control module 20 is consistent with that of the first slave control module 20, and will not be repeated herein.

In the embodiment, the slave control module 20 further includes a control unit 24, which is respectively coupled to the input unit 21, the output unit 22, and the communication unit 23. The control unit 24 is configured to receive the addressing enable signal through the input unit 21, receive the addressing data through the communication unit 23, and send the addressing enable signal through the output unit 22.

Optionally, the above selection module 30 may be implemented by a selection switch with a "choose one from two" function, which may be a switch circuit formed by a combination of multiplexer (MUX) circuits, metal oxide semiconductor field effect transistors (MOS transistors), and so on. A first input terminal of the selection module 30 is coupled to the output unit 22 of the (m-1)th slave control module 20, a second input terminal of the selection module 30 is coupled to the master control module 10, an output terminal of the selection module 30 is coupled to the input unit 21 of the mth slave control module 20, and a control terminal of the selection module 30 is coupled to the master control module 10 to receive an addressing mode signal sent by the master control module. The selection module 30 is configured to enable, according to the addressing mode signal, the connection between the output unit 22 of the (m-1)th slave control module 20 and the input unit 21 of the mth slave control module 20, so as to perform automatic addressing of the slave control modules 20; or to enable the connection between the master control module 10 and the input unit 21 of the mth slave control module 20, so as to perform manual addressing of the mth slave control module 20. Specifically, the selection module 30 is configured to enable the connection between the output unit 22 of the (m-1)th slave control module 20 and the input unit 21 of the mth slave control module 20 when the addressing mode signal is at a first level, so as to perform automatic addressing of the slave control modules 20; and enable the connection between the master control module 10 and the input unit 21 of the mth slave control module 20 when the addressing mode signal is at a second level, so as to perform manual addressing of the mth slave control module 20. For example, the first level is a high level while the second level is a low level, or, the first level is a low level while the second level is a high level.

As shown in FIG. 3, FIG. 3 is a schematic structural diagram of the selection module 30 in an embodiment. The selection module 30 includes a first logic AND gate AND1, a second logic AND gate AND2, a logic NOT gate NO, and a logic OR gate OR. Where, a first input terminal of the first logic AND gate AND1 serves as the first input terminal of the selection module 30, a first input terminal of the second logic AND gate AND2 serves as the second input terminal of the selection module 30, and a second input terminal of the second logic AND gate AND2 serves as the control terminal of the selection module 30. An input terminal of the logic NOT gate NO is coupled to the second input terminal of the second logic AND gate AND2, and an output terminal of the logic NOT gate NO is coupled to a second input terminal of the first logic AND gate AND1. A first input terminal of the logic OR gate OR is coupled to an output terminal of the first logic AND gate AND 1, a second input terminal of the logic OR gate OR is coupled to an output terminal of the second logic AND gate AND 2, and an output terminal of the logic OR gate OR servers as the output terminal of the selection module 30.

The following is a truth table for the selection module 30 described above.

| First input terminal X | Second input terminal Y | Control terminal SEL | Output terminal EN |
|---|---|---|---|
| 0 | 0 | 0 | 0 |
| 0 | 0 | 1 | 0 |
| 0 | 1 | 0 | 0 |
| 0 | 1 | 1 | 1 |
| 1 | 0 | 0 | 1 |
| 1 | 0 | 1 | 0 |
| 1 | 1 | 0 | 1 |
| 1 | 1 | 1 | 1 |

According to the logic circuit shown in FIG. 3 and the truth table above, the following formula may be obtained.

$$\mathrm{EN} = \mathrm{X} \cdot \mathrm{SEL} + \mathrm{Y} \cdot \overline{\mathrm{SEL}}$$

That is, when the addressing mode signal received by the control terminal is at the first level (low level "0"), the addressing enable signal output by the output terminal is the addressing enable signal received by the first input terminal; while when the addressing mode signal received by the control terminal is at the second level (high level "1"), the addressing enable signal output by the output terminal is the addressing enable signal received by the second input terminal.

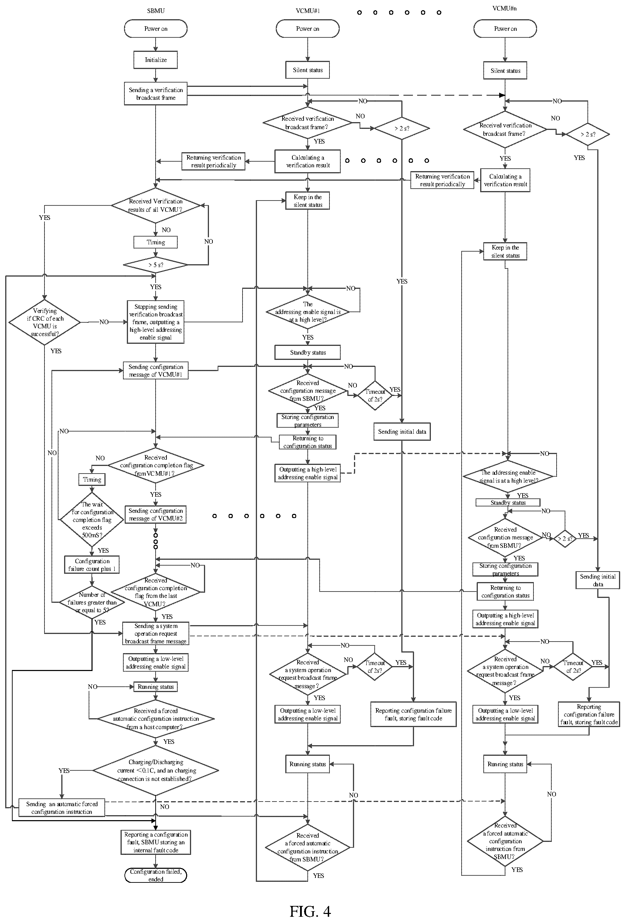

A addressing process of the slave control module 20 will be introduced below with reference to FIGs. 1 to 4. FIG. 4 is a flowchart of an embodiment of an addressing method for the battery management system according to the present disclosure.

(1) After the battery management system is powered on, output signals from the master control module 10 and the output units 22 of the slave control modules 20 are initialized to a low level "0", and each slave control module 20 enters a silent status by default. After being powered on and initialized, the master control module 10 sends a verification broadcast frame (e.g., FlowControlReq=0xAA in 0x0801FF00) to each slave control module 20 according to a set period (e.g. 50ms). Each slave control module 20 reads internal parameters (e.g., an existing address of the slave control module 20) and performs verification calculations (e.g., CRC8 calculations) after receiving the verification broadcast frame. A polynomial generated by a CRC8 standard is x^8+x^5+x^4+1, that is, the polynomial is used to perform correlation calculations with the internal parameters to obtain a verification result (such as a CRC result).

(2) After calculating the verification result, each slave control module 20 returns a frame of verification result (e.g., a CRC verification result: CfgResp_Type = 1, CfgResp_Crc = CRC8 in 0x1827FExx) to the master control module 10 in a set period (e.g., 50 ms). The master control module 10 then sequentially verifies the verification result returned by each slave control module 20 with internally calculated verification results. In an embodiment, the master control module 10 and the slave control modules 20 use the same verification algorithm, for example, both use the CRC8 verification algorithm.

(3) After the master control module 10 verifies that the verification of each slave control module 20 is successful, the master control module 10 periodically sends out a system operation request broadcast frame (e.g., FlowControlReq = 0x55 in 0x0801FF00, continuous to send for 2 seconds and then stops sending out the frame), and the system enters a normal running status. If the master control module 10 determines that any of the slave control modules 20 have failed the verification, it is considered that the slave control module 20 needs to needs to be re-addressed, then enters the addressing process, and stops the verification request (e.g., stops sending the 0x0801FF00 message).

When automatic addressing, the master control module 10 sends the addressing mode signal that is at the first level to the control terminal of each selection module 30. The selection module 30 enables a connection path between the output unit 22 of the (m-1)th slave control module 20 and the input unit 21 of the mth slave control module 20, and the slave control modules 20 enter the automatic addressing process of the following (4)-(7).

(4) After entering the automatic addressing process, the master control module 10 outputs a high-level addressing enable signal to the input unit 21 of the first slave control module 20 coupled to the master control module 10, and sends addressing data (e.g., a configuration message) to the communication unit 23 of the first slave control module 20 through a communication link. After detecting the high-level addressing enable signal through the input unit 21, the first slave control module 20 coupled to the master control module 10 enters a standby status. If the first slave control module 20 receives the configuration message from the master control module 10, it stores configuration parameters in an internal memory (e.g., an EE memory), and returns a configuration completion flag (CfgResp_Type=2) to the master control module 10 through the communication unit 23, and at the same time outputs the high-level addressing enable signal to the second slave control module 20 through the output unit 22, then the configuration of the first slave control module 20 is completed, i.e., the addressing of the first slave control module 20 is completed.

(5) After receiving the configuration completion flag from the first slave control module 20, the master control module 10 sends addressing data (e.g., a configuration message) to the communication unit 23 of the second slave control module 20. Similar to the configuration process of the first slave control module 20, the second slave control module 20 receives the configuration parameters and stores the configuration parameters in an internal memory, and at the same time returns a configuration completion flag (CfgResp_Type=2) to the master control module 10, and outputs the high-level addressing enable signal to the third slave control module 20 through the output unit 22.

(6) Configurations of the subsequent slave control modules 20 are performed subsequently according to the above configuration process.

(7) When the master control module 10 receives the configuration completion flag (CfgResp_Type=2) from the last slave control module 20, the master control module 10 sends a system operation request broadcast frame (FlowControlReq = 0x55) for a preset period of time (e.g., 2 seconds), then stops sending this message, and turns off the high-level addressing enable signal output by the master control module 10. After receiving the system operation request broadcast frame from the master control module 10, the slave control modules 20 turn off the high-level addressing enable signal output by the output unit 22 of the slave control modules 20, switch from the silent status to a running status, and then send and receive communication messages normally.

When manual addressing, the master control module 10 sends the addressing mode signal at the second level to the control terminal of the selection module 30 corresponding to the slave control module 20 that needs to be manually addressed. Then the selection module 30 enables a connection path between the master control module 10 and the input unit 21 of the slave control module 20, and the slave control module 20 enters the following manual addressing process:

The slave control module 20 receives the configuration message from the master control module 10, stores configuration parameters in an internal memory (e.g., an EE memory), and returns a configuration completion flag (CfgResp_Type=2) to the master control module 10 through the communication unit 23, then the configuration of the slave control module 20 is completed.

The above addressing process can also handle different system exceptions as follows.

(1) The master control module 10 sends the verification broadcast frame to each slave control module 20, and waits for each slave control module 20 to return its calculated CRC result. If not all the CRC results of the slave control modules 20 are received after waiting for a timeout of 5 seconds, or if the verification of any returned CRC result fails, the master control module 10 will directly enter the automatic addressing process.

(2) After entering the automatic addressing process, the master control module 10 sends a configuration message (0x0823FF00 and 0x0824FF00) to the slave control modules 20, and waits for the slave control modules 20 to return the configuration completion flags. If a timeout (e.g., 500ms) occurs, the master control module 10 records the number of configuration failures as 1, and sends the configuration message to the slave control modules 20 again. If the cumulative number of the configuration failures is greater than 5 times, the automatic addressing process is ended, and the configuration fails. The slave control module 20 reports an addressing fault of the slave control modules 20 to the master control module 10, and the master control module 10 stores an internal fault code.

(3) The slave control module 20 is powered on and initialized. If the slave control module 20 fails to receive the verification broadcast frame from the master control module 10 after a preset duration (e.g., 2 seconds), the slave control module 20 reports a configuration addressing fault of the slave control module 20 to the master control module 10 and stores an internal fault code, then the slave control module 20 automatically enters the running status and starts running, and then sends initial data for running.

(4) The slave control module 20 enters the standby status. If not all the configuration messages sent by the master control module 10 are received after a preset duration (e.g., 2 seconds), or if the configuration messages are received but cannot be stored in the EE memory, the slave control module 20 reports an addressing fault of the slave control module 20 to the master control module 10, and stores an internal fault code, then the slave control module 20 automatically enters the running status and starts running, and then sends initial data for running.

(5) After completing writing of the parameter configuration sent by the master control module 10, if a running broadcast frame (0x55) sent by the master control module 10 is still not received after a preset duration (e.g., 5 seconds), the slave control module 20 reports an addressing fault of the slave control module 20 to the master control module 10, and stores an internal fault code, then the slave control module 20 automatically enters the running status and starts running, and then sends initial data for running.

(6) After the system enters the running status, if it receives a forced automatic addressing instruction from a host computer, it first determines whether the charging and discharging current is less than a preset value (e.g., 0.1 C) and an charging connection is not established. If it is true, the system returns to the automatic addressing process. The master control module 10 first returns to an automatic configuration stage, and sends an instruction to return to the standby status to each slave control module 20. After receiving the instruction, the slave control module 20 enters the standby status, and the system then performs automatic addressing again.

The input unit 21 and the output unit 22 are introduced below.

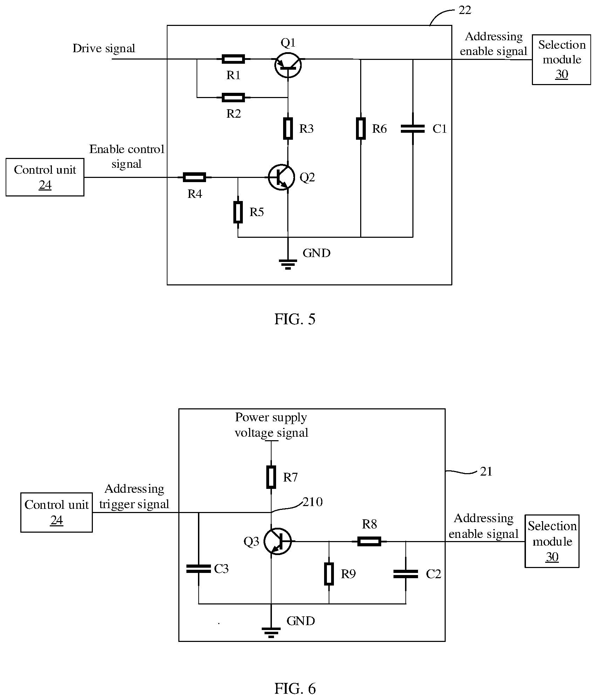

As shown in FIG. 5, FIG. 5 is a schematic structural diagram of the output unit 22 in an embodiment. The output unit 22 includes a first switch Q1 and a second switch Q2.

A first terminal of the first switch Q1 is configured to receive a drive signal, and a second terminal of the first switch Q1 is coupled to the selection module 30 to output the addressing enable signal to the selection module 30. A first terminal of the second switch Q2 is coupled to a control terminal of the first switch Q1, a second terminal of the second switch Q2 is grounded, and a control terminal of the second switch Q2 is coupled to the control unit 24 to receive an enable control signal from the control unit 24.

Optionally, in an embodiment, the output unit 22 further includes a first resistor R1, a second resistor R2, a third resistor R3, a fourth resistor R4, a fifth resistor R5, a sixth resistor R6 and a first capacitor C1.

The first resistor R1 is coupled to the first terminal of the first switch Q1, and the first terminal of the first switch Q1 is configured to receive the drive signal through the first resistor R1. The second resistor R2 is coupled to the control terminal of the first switch Q1, and the control terminal of the first switch Q1 is configured to receive the drive signal through the second resistor R2. The third resistor R3 is coupled between the control terminal of the first switch Q1 and the first terminal of the second switch Q2. The fourth resistor R4 is coupled between the control unit 24 and the control terminal of the second switch Q2, and the control terminal of the second switch Q2 is configured to receive the enable control signal through the fourth resistor R4. The fifth resistor R5 is coupled to the control terminal of the second switch Q2, and the control terminal of the second switch Q2 is grounded through the fifth resistor R5. The sixth resistor R6 is coupled to the second terminal of the first switch Q1, and the second terminal of the first switch Q1 is grounded through the sixth resistor R6. The first capacitor C1 is coupled to the second terminal of the first switch Q1, and the second terminal of the first switch Q1 is also grounded through the first capacitor C1.

In an embodiment, the first switch Q1 is a PNP transistor. Correspondingly, in the first switch Q1, the first terminal is the emitter, the second terminal is the collector, and the control terminal is the base. The second switch Q2 is an NPN transistor. Correspondingly, in the second switch Q2, the first terminal is the collector, a second terminal is the emitter, and the control terminal is the base.

After the slave control module 20 finishes addressing, the control unit 24 of the slave control module 20 outputs a high-level enable control signal to the control terminal of the second switch Q2 to turn on the second switch Q2, thereby lowering the base level of the first switch Q1 to a low level, thus the first switch Q1 is turned on, thereby outputting the drive signal as a high-level addressing enable signal to the next slave control module 20. In the embodiment, the drive signal is a high-level addressing enable signal received by the input unit 21 of the slave control module 20 from a previous slave control module 20 or the master control module 10.

It can be understood that, the first switch is a low level conduction transistor, and the second switch Q2 is a high level conduction transistor. In other embodiments, the first switch Q1 and the second switch Q2 may also be replaced by other switches with similar functions, such as MOS transistors of corresponding models. Specifically, the first switch Q1 can be a PMOS transistor, and the second switch Q2 can be a NMOS transistor.

As shown in FIG. 6, FIG. 6 is a schematic structural diagram of an input unit 21 in an embodiment. The input unit 21 includes a seventh resistor R7 and a third switch Q3.

The seventh resistor R7 is coupled to a first terminal of the third switch Q3, and the first terminal of the third switch Q3 is configured to receive a power supply voltage signal through the seventh resistor R7. The control unit 24 is coupled to a connection node 210 between the seventh resistor R7 and the first terminal of the third switch Q3, so as to obtain an addressing trigger signal. A second terminal of the third switch Q3 is grounded, and a control terminal of the third switch Q3 is coupled to the selection module 30 to receive the addressing enable signal.

Optionally, in an embodiment, the input unit 21 further includes an eighth resistor R8, a ninth resistor R9, a second capacitor C2 and a third capacitor C3.

The eighth resistor R8 is coupled between the control terminal of the third switch Q3 and the selection module 30, so that the control terminal of the third switch Q3 receives the addressing enable signal through the eighth resistor R8. The ninth resistor R9 is coupled to the control terminal of the third switch Q3, and the control terminal of the third switch Q3 is grounded through the ninth resistor R9. The second capacitor C2 is coupled to the control terminal of the third switch Q3 through the eighth resistor R8, and the control terminal of the third switch Q3 is also grounded through the eighth resistor R8 and the second capacitor C2. The third capacitor C3 is coupled to the first terminal of the third switch Q3, and the first terminal of the third switch Q3 is grounded through the third capacitor C3.

In an embodiment, the third switch Q3 is an NPN transistor. Correspondingly, in the third switch Q3, the first terminal is the collector, the second terminal is the emitter, and the control terminal is the base.

When the addressing enable signal received by the slave control module 20 from a previous slave control module 20 or the master control module 10 is at a high level, the third switch Q3 is turned on to lower the addressing trigger signal to a low level, and the control unit 24 is triggered to enter the standby status.

It can be understood that, the third switch is a high level conduction transistor. In other embodiments, the third switch Q3 may also be replaced by other switches with similar functions, such as MOS transistors of corresponding models. Specifically, the third switch Q3 can be a NMOS transistor.

The battery management system provided in the embodiment includes a master control module, a plurality of selection modules, and N slave control modules. The slave control module includes an input unit, an output unit, and a communication unit. The input unit of the first slave control module of the N slave control modules is coupled to the master control module, so as to receive the addressing enable signal from the master control module. The input unit of the mth slave control module is coupled to the output unit of the (m-1)th slave control module and the master control module through one of the selection modules, so as to receive, through the selection module, the addressing enable signal from the (m-1)th slave control module or the master control module. The communication units of the N slave control modules are respectively coupled to the master control module. Where N and m are integers, $N \geq 2$, $2 \leq m \leq N$. By means of the described manner, by providing selection modules among the plurality of slave control modules, different addressing modes can be freely switched, that is, automatic addressing or manual addressing can be implemented. On the one hand, the diversified addressing modes provided are beneficial to the operability of the battery management system (BMS), and on the other hand, the selection may be performed according to different application scenarios, for example, when one of the slave control modules fails, the slave control module can be independently addressed without sequentially addressing all the slave control modules, which improves the addressing efficiency of the slave control modules.

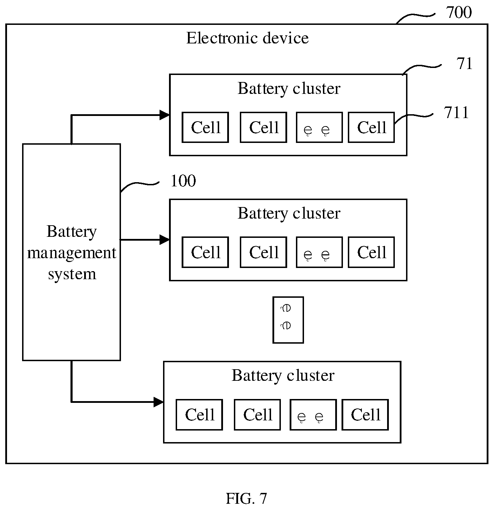

Referring to FIG. 7, FIG. 7 is a schematic structural diagram of an embodiment of an electronic device provided in the present disclosure. The electronic device 700 includes the battery management system 100 as described in the above embodiment, and a plurality of battery clusters 71 coupled to the battery management system 100. The battery management system 100 is configured to monitor parameter information (temperature, voltage, current, charge state, etc.) of the plurality of battery clusters 71, and manage and control statuses of the plurality of battery clusters 71. Specifically, the plurality of battery clusters 71 correspond one-to-one with the plurality of slave control modules 20. The battery cluster 71 includes a plurality of cells 711. The slave control module 20 is configured to monitor a corresponding battery cluster 71, so as to realize voltage and temperature acquisition function and equalization control function for the battery cluster. The master controller 10 is further configured to perform an overall control, which is responsible for collecting and processing the signals collected by each slave control module 20, and estimating battery statuses according to the collected signals, so as to implement charging and discharging control and logic operations for each battery cluster 71.

It is understandable that the electronic device 700 may be a new energy vehicle or a hybrid vehicle, or other electronic devices.

**Claims**

1. A battery management system (100) comprising:

a master control module (10);

a plurality of selection modules (30); and

N slave control modules (20) coupled in sequence, wherein the slave control module (20) comprises an input unit (21), an output unit (22) and a communication unit (23); wherein the input unit (21) of the first slave control module (20) of the N slave control modules (20) is coupled to the master control module (10), to receive an addressing enable signal sent by the master control module (10); the input unit (21) of the mth slave control module (20) is coupled to the output unit (22) of the (m-1)th slave control module (20) and the master control module (10) through one of the selection modules (30), to receive an addressing enable signal sent by the (m-1)th slave control module (20) or the master control module (10) through the selection module (30); the communication units (23) of the N slave control modules (20) are respectively coupled to the master control module (10);

wherein N and m are integers, $N \geq 2$, $2 \leq m \leq N$.

2. The battery management system (100) according to claim 1, wherein a first input terminal of the selection module (30) is coupled to the output unit (22) of the (m-1)th slave control module (20), a second input terminal of the selection module (30) is coupled to the master control module (10), an output terminal of the selection module (30) is coupled to the input unit (21) of the mth slave control module (20), and a control terminal of the selection module (30) is coupled to the master control module (10) to receive an addressing mode signal sent by the master control module (10);

wherein the selection module (30) is configured to enable, according to the addressing mode signal, the connection between the output unit (22) of the (m-1)th slave control module (20) and the input unit (21) of the mth slave control module (20), so as to perform automatic addressing of the slave control modules (20); or to enable the connection between the master control module (10) and the input unit (21) of the mth slave control module (20), so as to perform manual addressing of the mth slave control module (20).

3. The battery management system (100) according to claim 2, wherein the selection module (30) comprises:

a first logic AND gate (AND1), wherein a first input terminal of the first logic AND gate (AND1) serves as the first input terminal of the selection module (30);

a second logic AND gate (AND2), wherein a first input terminal of the second logic AND gate (AND2) serves as the second input terminal of the selection module (30), and a second input terminal of the second logic AND gate (AND2) serves as the control terminal of the selection module (30);

a logic NOT gate (NO), wherein an input terminal of the logic NOT gate (NO) is coupled to the second input terminal of the second logic AND gate (AND2), and an output terminal of the logic NOT gate (NO) is coupled to a second input terminal of the first logic AND gate (AND1); and

a logic OR gate (OR), wherein a first input terminal of the logic OR gate (OR) is coupled to an output terminal of the first logic AND gate (AND1), a second input terminal of the logic OR gate (OR) is coupled to an output terminal of the second logic AND gate (AND2), and an output terminal of the logic OR gate (OR) serves as the output terminal of the selection module (30).

4. The battery management system (100) according to claim 2, wherein the slave control module (20) further comprises a control unit (24) which is respectively coupled to the input unit (21), the output unit (22), and the communication unit (23); wherein the control unit (24) is configured to receive the addressing enable signal through the input unit (21), receive addressing data through the communication unit (23), and send the addressing enable signal through the output unit (22).

5. The battery management system (100) according to claim 4, wherein the output unit (22) comprises:

a first switch (Q1), wherein a first terminal of the first switch (Q1) is configured to receive a drive signal, and a second terminal of the first switch (Q1) is coupled to the selection module (30) to output the addressing enable signal to the selection module (30); and

a second switch (Q2), wherein a first terminal of the second switch (Q2) is coupled to a control terminal of the first switch (Q1), a second terminal of the second switch (Q2) is grounded, and a control terminal of the second switch (Q2) is coupled to the control unit (24) to receive an enable control signal from the control unit (24);

wherein the first switch (Q1) is a low level conduction transistor; after the slave control module (20) finishes addressing, the control unit (24) of the slave control module (20) outputs the enable control signal to the control terminal of the second switch (Q2) to turn on the second switch (Q2), thereby lowering the level of control terminal of the first switch (Q1) to a low level, so as to turn on the first switch (Q1), and output the drive signal as an addressing enable signal to the next slave control module (20).

6. The battery management system (100) according to claim 5, wherein the drive signal is a high-level addressing enable signal received by the input unit (21) of the slave control module (20) from a previous slave control module (20) or the master control module (10); wherein the output unit (22) further comprises:

   a first resistor (R1) coupled to the first terminal of the first switch (Q1); wherein the first terminal of the first switch (Q1) is configured to receive the drive signal through the first resistor (R1);
   a second resistor (R2) coupled to the control terminal of the first switch (Q1); wherein the control terminal of the first switch (Q1) is configured to receive the drive signal through the second resistor (R2);
   a third resistor (R3) coupled between the control terminal of the first switch (Q1) and the first terminal of the second switch (Q2);
   a fourth resistor (R4) coupled between the control unit (24) and the control terminal of the second switch (Q2); wherein the control terminal of the second switch (Q2) is configured to receive the enable control signal through the fourth resistor (R4); and
   a fifth resistor (R5) coupled to the control terminal of the second switch (Q2); wherein the control terminal of the second switch (Q2) is grounded through the fifth resistor (R5).

7. The battery management system (100) according to claim 5, wherein the drive signal is a high-level addressing enable signal received by the input unit (21) of the slave control module (20) from a previous slave control module (20) or the master control module (10); wherein the output unit (22) further comprises:

   a sixth resistor (R6) coupled to the second terminal of the first switch (Q1); wherein the second terminal of the first switch (Q1) is grounded through the sixth resistor (R6); and
   a first capacitor (C1) coupled to the second terminal of the first switch (Q1); wherein the second terminal of the first switch (Q1) is also grounded through the first capacitor (C1).

8. The battery management system (100) according to claim 4, wherein the input unit (21) comprises:

   a seventh resistor (R7); and
   a third switch (Q3), wherein a first terminal of the third switch (Q3) is coupled to the seventh resistor (R7) and receives a power supply voltage signal through the seventh resistor (R7); the control unit (24) is coupled to a connection node between the seventh resistor (R7) and the first terminal of the third switch (Q3), so as to obtain an addressing trigger signal; a second terminal of the third switch (Q3) is grounded, and a control terminal of the third switch (Q3) is coupled to the selection module (30) to receive the addressing enable signal;
   wherein when the control terminal of the third switch (Q3) has received the addressing enable signal, the third switch (Q3) is turned on to lower the addressing trigger signal to a low level, so as to trigger the control unit (24) to enter a standby status.

9. The battery management system (100) according to claim 8, wherein the input unit (21) further comprises:

   an eighth resistor (R8) coupled between the control terminal of the third switch (Q3) and the selection module (30); wherein the control terminal of the third switch (Q3) receives the addressing enable signal through the eighth resistor (R8);
   a ninth resistor (R9) coupled to the control terminal of the third switch (Q3); wherein the control terminal of the third switch (Q3) is grounded through the ninth resistor (R9);
   a second capacitor (C2) coupled to the control terminal of the third switch (Q3) through the eighth resistor (R8); wherein the control terminal of the third switch (Q3) is also grounded through the eighth resistor (R8) and the second capacitor (C2); and
   a third capacitor (C3) coupled to the first terminal of the third switch (Q3); wherein the first terminal of the third switch (Q3) is grounded through the third capacitor (C3).

10. An electronic device (700) comprising the battery management system (100) according to any one of claims 1 to 9 and a plurality of battery clusters (71) coupled to the battery management system (100), wherein the battery management system (100) is configured to monitor parameter information of the plurality of battery clusters (71), and manage and control statuses of the plurality of battery clusters (71).

FIG. 1

FIG. 2

FIG. 3

FIG. 4

Drive signal

Q1

R1

R2

R3

R6

C1

Addressing
enable signal

Selection
module
30

22

Control unit
24

Enable control
signal

R4

Q2

R5

GND

FIG. 5

Power supply
voltage signal

R7

Control unit
24

Addressing
trigger signal

210

Q3

R8

21

Addressing
enable signal

Selection
module
30

C3

R9

C2

GND

FIG. 6

700

Electronic device

71

Battery cluster

711

| Cell | Cell | ୧ ୧ | Cell |

100

Battery cluster

| Cell | Cell | ୧ ୧ | Cell |

Battery
management
system

Battery cluster

| Cell | Cell | ୧ ୧ | Cell |

FIG. 7

Europäisches
Patentamt

European
Patent Office

Office européen
des brevets

# EUROPEAN SEARCH REPORT

**Application Number**

**EP 24 22 1009**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 784 689 A (HANG ZHOU GOLD ELECTRONIC EQUIPMENT CO LTD) 29 March 2024 (2024-03-29) | 1,10 | INV. H04L12/40 |
| A | * paragraphs [0006] - [0021], [0029] - [0045]; figure 2 * | 2-9 | |
| A | CN 112 599 082 A (SHENZHEN SUNMOON MICROELECTRONICS CO LTD) 2 April 2021 (2021-04-02) * paragraphs [0022] - [0079]; figure 2 * | 1-10 | |
| A | CN 115 528 327 A (EVE ENERGY CO LTD) 27 December 2022 (2022-12-27) * paragraphs [0058] - [0188]; figure 1 * | 1-10 | |
| A | US 2017/222275 A1 (KRISHNAN RAMKUMAR [US] ET AL) 3 August 2017 (2017-08-03) * paragraphs [0030] - [0037], [0049] - [0063]; figure 1 * | 1-10 | |

**TECHNICAL FIELDS SEARCHED (IPC)**

H04L

The present search report has been drawn up for all claims

| Place of search | Date of completion of the search | Examiner |
|---|---|---|
| Munich | 12 May 2025 | Itani, Maged |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 1009

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2025

| Patent document cited in search report | | Publication date | Patent family member(s) | | Publication date |
|---|---|---|---|---|---|
| CN 117784689 | A | 29-03-2024 | NONE | | |
| CN 112599082 | A | 02-04-2021 | NONE | | |
| CN 115528327 | A | 27-12-2022 | NONE | | |
| US 2017222275 | A1 | 03-08-2017 | AU | 2017212040 A1 | 02-08-2018 |
| | | | BR | 112018014789 A2 | 11-12-2018 |
| | | | CA | 3012430 A1 | 03-08-2017 |
| | | | CN | 108604813 A | 28-09-2018 |
| | | | EP | 3408916 A1 | 05-12-2018 |
| | | | ES | 2925737 T3 | 19-10-2022 |
| | | | JP | 2019511077 A | 18-04-2019 |
| | | | US | 2017222275 A1 | 03-08-2017 |
| | | | WO | 2017130175 A1 | 03-08-2017 |
| | | | ZA | 201804684 B | 26-06-2019 |

EPO FORM P0459

For more details about this annex : see Official Journal of the European Patent Office, No. 12/82